# EUROPÄISCHE PATENTANMELDUNG

(11) **EP 0 884 270 A1**
(43) Veröffentlichungstag der Anmeldung: **16.12.1998**
(21) Anmeldenummer: 98110586.9
(22) Anmeldetag: 09.06.1998
(51) Int. Cl.: C01B 3/00, C01B 3/32

(54) **Verfahren zur Behandlung eines Methanolreformierungskatalysators**

(30) Priorität: 13.06.1997 DE 19725009
(71) Anmelder: dbb fuel cell engines GmbH, 73230 Kirchheim/Teck-Nabern (DE); BASF AKTIENGESELLSCHAFT, 67056 Ludwigshafen (DE)
(72) Erfinder: Autenrieth, Rainer, 89155 Erbach (DE); Krumberger, Otto, Dr., 68163 Mannheim (DE)

(57) **Zusammenfassung**

Die Verfindung bezieht sich auf ein Verfahren zur Behandlung eines Methanolreformierungskatalysators, wie er z.B. zur Wasserdampfreformierung von Methanol verwendbar ist.

Erfindungsgemäß wird der Methanolreformierungskatalysator vor Verwendung zur Katalysierung einer Methanolreformierungsreaktion durch Ausheizen in trockener Atmosphäre vorgealtert, um dadurch seinen inhärenten anfänglichen Volumenschwund schon vor Beginn der Methanolreformierungsreaktion durchzumachen.

Verwendung z.B. zur Bereitstellung von Methanolreformierungskatalysatoren für Methanolreformierungsreaktoren in brennstoffzellenbetriebenen Kraftfahrzeugen.

## Beschreibung

Die Erfindung bezieht sich auf ein Verfahren zur Behandlung eines Methanolreformierungskatalysators. Derartige Katalysatoren sind in verschiedenen Zusammensetzungen bekannt, siehe zum Beispiel die Offenlegungsschriften DE 35 31 757 A1 und EP 0 201 070 A1. Meist wird das Katalysatormaterial in Form einer Katalysatorpelletschüttung in den Reformierungsreaktionsraum eines Methanolreformierungsreaktors eingebracht. Derartige Reaktoren dienen beispielsweise zur Erzeugung von Wasserstoff für die Brennstoffzellen eines brennstoffzellenbetriebenen Kraftfahrzeuges mittels Wasserdampfreformierung von flüssig mitgeführtem Methanol.

Es sind bereits unterschiedliche Verfahren zur Aufrechterhaltung einer hohen katalytischen Aktivität bzw. zur Erzielung einer hohen Lebensdauer des Methanolreformierungskatalysators vorgeschlagen worden. So wird in der Offenlegungsschrift JP 4-141234 (A) zur Gewinnung eines Katalysators mit langer Lebensdauer sowie hoher Aktivität und Selektivität eine spezielle Rezeptur verschiedener Metalloxide angegeben.

In der Offenlegungsschrift JP 63-310703 (A) wird das Katalysatormaterial im Reformierungsreaktionsraum eines Methanolreformierungsreaktors vor Beginn des Reformierungsreaktionsbetriebes einer Reduktionsreaktion unterzogen, die zu einer Volumenabnahme des Katalysators führt. Eine druckfederbelastete, bewegliche Deckplatte hält das als Pelletschüttung in den Reaktionsraum eingebrachte Katalysatormaterial als dichte Packung zusammengedrückt. Die Reduktionsreaktion ist ein für den Betrieb eines Cu-Katalysator notwendiger Vorgang. Der dabei auftretende Volumenschwund ist deutlich geringer als der Volumenschwund, der während des normalen Reformierungsbetriebs auftritt.

In der Offenlegungsschrift JP 63-315501 (A) wird das Einbringen einer Luftkammer zwischen einen Brenner und einen Reformierungsreaktionsraum vorgeschlagen, über den in kontrollierter Weise Luft zuführbar ist, um die Katalysatortemperatur auf einem vorgebenen Wert zu halten.

Bei einem in der Offenlegungsschrift DE 33 14 131 A1 offenbarten Verfahren wird zur Verlängerung der Lebensdauer des Methanolreformierungskatalysators das Methanol von darin ggf. enthaltenen Chlorverbindungen befreit, bevor es mit dem Katalysator in Kontakt gebracht wird.

Aus der Offenlegungsschrift GB 2 132 108 A ist es bekannt, beim Anfahren eines Methanolreformierungsreaktors das im Reaktionsraum vorliegende Katalysatormaterial dadurch rasch aufzuheizen, daß Methanol mit stöchiometrischem oder unterstöchiometrischem Sauerstoffanteil verbrannt und die Verbrennungsabgase sowohl durch einen mit dem Reaktionsraum in Wärmekontakt stehenden Temperierraum als auch durch den Reaktionsraum selbst hindurchgeleitet werden. Dem in den Reaktionsraum geleiteten Verbrennungsgasstrom kann Wasser zugedüst werden, um Überhitzungen zu vermeiden. Sobald die gewünschte Reformierungstemperatur erreicht ist, wird der Aufheizvorgang beendet und in den Reformierungsbetrieb übergegangen. Dies ist typischerweise innerhalb von weniger als einer Minute der Fall.

In der Auslegeschrift DE 1 246 688 ist ein Methanolreformierungsreaktor offenbart, der einen Nickelkatalysator und einen Zink-Kupfer-Katalysator beinhaltet. Im Gebrauch wird der Reformierungsreaktionsbetrieb periodisch für Katalysatorbehandlungsphasen unterbrochen, die jeweils aus einer Regenerierungsphase und optional einer anschließenden Nickelkatalysatorreaktivierungsphase bestehen. In den Regenerierungsphasen wird der Reaktor mit einem freien Sauerstoff enthaltenden Gas bei einer Temperatur zwischen 150°C und 450°C gespült, während in den Nickelkatalysatorreaktivierungsphasen eine Spülung mit einem freien Wasserstoff enthaltenden Gas erfolgt. Der Herstellungsprozeß für den Nickelkatalysator vor dessen Verwendung für die Methanolreformierung beinhaltet am Ende eine Behandlung eines Nickelvorprodukts in reduzierender Atmosphäre zwecks Reduktion zu metallischem Nickel für mehrere Stunden bei Temperaturen zwischen 150°C und 600°C. Für den Zink-Kupfer-Katalysator kann am Ende seines Herstellungsprozesses eine Temperaturbehandlung bei 250°C für vier Stunden zur Entfernung eines eingesetzten Granulierhilfsmittels vorgesehen sein.

Eine bekannte Tatsache praktisch aller gängigen Methanolreformierungskatalysatoren besteht darin, daß sie in den ersten Betriebsstunden der Methanolreformierung eine merkliche Volumenabnahme erfahren, die eine entsprechende Abnahme der spezifischen Aktivität des Katalysatormaterials und damit eine entsprechende Verringerung der Leistungsfähigkeit eines den Katalysator beinhaltenden Methanolreformierungsreaktors zur Folge hat.

Der Erfindung liegt als technisches Problem die Bereitstellung eines Verfahrens zur Behandlung eines Methanolreformierungskatalysators derart zugrunde, daß ein den Katalysator enthaltender Methanolreformierungsreaktor auch in den ersten Betriebsstunden keine merkliche Abnahme seiner Leistungsfähigkeit aufgrund einer durch Volumenabnahme des Katalysators verursachten Verminderung der spezifischen Katalysatoraktivität zeigt.

Die Erfindung löst dieses Problem durch die Bereitstellung eines Verfahrens zur Behandlung eines Methanolreformierungskatalysators mit den Merkmalen des Anspruches 1. Die Behandlung beinhaltet ein mehrstündiges Ausheizen des Methanolreformierungskatalysators in trockener Atmosphäre, die oxidierend oder inert ist, bei ausreichend hoher Temperatur zwecks Voralterung. Die Voralterungsbehandlung hat zur Folge, daß der Katalysator schon während dieses Prozesses und damit vor seiner Verwendung im Methanolreformierungsbetrieb seine typische anfängliche Volumenabnahme erfährt. Die Verfahrensparameter sind dementsprechend so gewählt, daß dieser gewünschte Voralterungseffekt erreicht wird, so daß am Ende der Voralterungsbehandlung der Methanolreformierungskatalysator in einer im wesentlichen vollständig geschrumpften Form vorliegt, in der er beim anschließenden Einsatz im Methanolreformierungsbetrieb keine merkliche weitere Volumenabnahme mehr zeigt. Um dies zu erreichen, werden Dauer und Temperatur der Voralterungsbehandlung geeignet auf das jeweils vorliegende Katalysatormaterial abgestimmt, das in einer der herkömmlichen Zusammensetzungen hergestellt sein kann.

Als Beispiel sei stellvertretend für zahlreiche weitere Realisierungen der Erfindung ein herkömmlicher Cu/ZnO/Al₂O₃-Methanolreformierungskatalysator betrachtet, bei dem das Cu/ZnO-Material den katalytisch aktiven Bestandteil bildet, der beispielsweise dafür geeignet ist, die Wasserdampfreformierung von Methanol in einen entsprechenden Methanolreformierungsreaktor zu katalysieren. Das Katalysatormaterial wird herkömmlicherweise meist in Form von Pellets bereitgestellt und als Pelletschüttung in den Reformierungsreaktionsraum des Methanolreformierungsreaktors eingebracht.

Um zu verhindern, daß die Leistungsfähigkeit, d.h. der Umsatz, des Reaktors in den ersten Stunden des Reformierungsreaktionsbetriebes merklich abnimmt, wird der Methanolreformierungskatalysator zuvor einer Voralterungsbehandlung unterworfen.

Diese kann außerhalb des Reformierungsreaktionsraums vor Einbringen des Katalysators in denselben oder alternativ im Reformierungsreaktionsraum erfolgen, wobei in letzterem Fall während des Voralterungsprozesses mehrmals Katalysatormaterial nachgefüllt wird, um den eintretenden Volumenschwund zu kompensieren. Das Verfahren zum voralternden Behandeln des Methanolreformierungskatalysators beinhaltet ein Ausheizen des herkömmlich hergestellten Katalysatormaterials in trockener Atmosphäre bei geeigneter Temperatur. Trocken bedeutet in diesem Zusammenhang ein Wasseranteil von weniger als 1 Volumenprozent. Wenn das hergestellte Katalysatormaterial in unreduzierter Form vorliegt, kann der voralternde Ausheizvorgang zum Beispiel an Luft erfolgen. Wenn das Katalysatormaterial durch vorheriges Anwenden einer Reduktionsreaktion in reduzierter Form vorliegt, wird das Ausheizen in inerter Atmosphäre, z.B. einer Stickstoff- oder Argonatmosphäre, vorgenommen.

Dauer und Temperatur des Ausheizvorgangs sind auf das jeweils vorliegende Katalysatormaterial abgestimmt. Typischerweise liegt die Temperatur im Bereich der üblichen Temperaturen für die spätere Methanolreformierungsreaktion, z.B. in der Größenordnung von 300°C, oder darüber. Typische Ausheizdauern liegen im Bereich mehrerer Stunden. Durch die Voralterungsbehandlung erfährt das Katalysatormaterial den typischen anfänglichen Volumenschwund. Dabei zeigt sich, daß die für diese Behandlung gewählten Prozeßbedingungen sicherstellen, daß der am Behandlungsende vorliegende, vorgealterte Katalysator weitgehend geschrumpft ist, d.h. bei der anschließenden Verwendung zur Katalysierung der Methanolreformierungsreaktion in seinem Volumen nicht mehr merklich abnimmt. Vorzugsweise werden die Behandlungsparameter so gewählt, daß das Katalysatormaterial auf das kleinste erreichbare Volumen schrumpft.

Nach Abschluß des Voralterungsprozesses kann der vorgealterte Methanolreformierungskatalysator in den Reformierungsreaktionsraum eines Methanolreformierungsreaktors eingefüllt werden, falls er nicht bereits dort vorgealtert wurde. Falls das vorgealterte Katalysatormaterial nicht sofort benötigt wird, kann es in einem geschlossenen Behälter aufbewahrt werden, wodurch sich der Voralterungseffekt über eine längere Lagerzeit hinweg aufrechterhalten läßt.

Der verfahrensgemäß behandelte Methanolreformierungskatalysator, der seinen inhärenten Volumenschwund bereits während der Voralterung erfahren hat, zeigt selbst in den ersten Stunden eines anschließenden Reformierungsreaktionsbetriebes keine wesentliche Volumenabnahme mehr. Dementsprechend bleibt seine spezifische Aktivität und damit der von einem Methanolreformierungsreaktor, in dessen Reformierungsreaktionsraum sich der Katalysator befindet, erzielte Reaktionsumsatz schon ab Beginn des Reformierungsreaktionsbetriebes weitgehend erhalten.

Ein weiterer Vorteil des bei Beginn des Reformierungsreaktionsbetriebes vorgealtert im Reformierungsreaktionsraum vorliegenden Methanolreformierungskatalysators besteht darin, daß für den anschließenden Reformierungsreaktionsbetrieb keine nennenswerten Mengen an austragbaren Katalysatorbestandteilen mehr entstehen, die ansonsten zu Schädigungen in nachfolgenden Reaktoranlagenkomponenten führen könnten.

Das erfindungsgemäße Verfahren eignet sich besonders zur Bereitstellung eines Methanolreformierungskatalysators für den Einsatz in einem Methanolreformierungsreaktor eines brennstoffzellenbetriebenen Kraftfahrzeuges, um dort die Wasserdampfreformierung von flüssig mitgeführtem Methanol zwecks Erzeugung von Wasserstoff für die Brennstoffzellen zu katalysieren.

## Patentansprüche

1. Verfahren zur Behandlung eines Methanolreformierungskatalysators,
**dadurch gekennzeichnet**, **daß**
der Methanolreformierungskatalysator vor Verwendung zur Katalysierung einer Methanolreformierungsreaktion durch mehrstündiges Ausheizen in trockener, oxidierender oder inerter Atmosphäre bei einer Temperatur von mindestens etwa 300°C volumenschrumpfend vorgealtert wird, bis der anfängliche merkliche Katalysatorvolumenschwund zum Stillstand kommt.
